# EUROPEAN PATENT APPLICATION

(11) **EP 4 287 373 A1**
(43) Date of publication of application: **06.12.2023**
(21) Application number: 22746076.3
(22) Date of filing: 31.01.2022
(51) Int. Cl.: H01M 50/204, H01M 10/613, H01M 10/653, H01M 10/6554, H01M 50/588, H01M 50/591

(54) **BATTERY ASSEMBLY, AND BATTERY PACK**

(30) Priority: 01.02.2021 JP 2021014633
(71) Applicant: IBIDEN Co., Ltd., Gifu 503-8604 (JP)
(72) Inventor: TANGE Keisuke, Ibi-gun, Gifu 501-0695 (JP)
(74) Representative: Hoffmann Eitle
(86) International application number: PCT/JP2022/003688
(87) International publication number: WO 2022/163857

(57) **Abstract**

Provided are a battery assembly and a battery pack in which the occurrence of thermal runaway can be suppressed during normal and abnormal operation by efficiently cooling battery cells while suppressing the propagation of heat between the battery cells, and which are easy to design and assemble. Each battery cell (2) has an electrode surface (2a) including an electrode (3), and an outer peripheral surface (2b) which is a surface orthogonal to the electrode surface (2a), wherein the battery cells (2) are arranged such that the outer peripheral surfaces (2b) face one another, and the battery cells (2) are connected in series or in parallel by way of the electrodes (3) and connectors or the like, which are not shown in the drawing. The outer peripheral surface of each battery cell (2) is covered by an insulating material (14), and the outer peripheral surface of each insulating material (14) is covered by a heat dissipating member (8), thereby configuring a battery assembly (40). The heat dissipating member (8) is a tubular body of which both end portions are open, for example, and a plurality of holes (14a) penetrate through the insulating material (14) in the thickness direction thereof, from the surface on the battery cell (2) side to the surface on the heat dissipating member (8) side.

## Description

### TECHNICAL FIELD

The present invention relates to an assembled battery and a battery pack which are to be mounted, for example, in power tools, etc. and used as power sources for electric motors, etc.

### BACKGROUND ART

Power tools generally include ones which are used in the state of being connected to the so-called commercial power source and ones which have an assembled battery mounted therein that serves as a power source for an electric motor for driving. The power tools having an assembled battery mounted therein are frequently used from the point of view of the excellent handleability, etc.

An assembled battery is a battery in which a plurality of battery cells is connected serially or in parallel. For example, battery cells are enclosed in a battery case made of, for example, a polycarbonate and united therewith, and the assembled battery is housed inside a power tool.

Mainly used as such battery cells to be mounted in power tools are lithium-ion secondary batteries, which can have higher capacities and higher outputs than lead acid batteries and nickel-hydrogen batteries. However, in case where thermal runaway has occurred in one battery cell because of internal short-circuiting, overcharge, or the like of the battery (that is, in case of " abnormality"), it is possible that heat transfer to adjoining another battery cells might occur to cause thermal runaway to the adjoining another battery cells.

As a measure against the occurrence of thermal runaway described above, Patent Document 1, for example, proposes an assembled battery in which in case where abnormal heat generation has occurred, for example, because an overcurrent has flowed into a battery cell, the burning can be prevented or inhibited from spreading to adjoining battery cells. The assembled battery described in Patent Document 1 is configured of a plurality of battery cells and a block for holding the battery cells, the block being made of a metallic material and composed of a plurality of small blocks. The dimensions of the gap between the block and each battery cell are regulated.

Patent Document 1 states that in the assembled battery described therein, which has such configuration, heat can be rapidly diffused because the block holding the battery cells is made of a metallic material.

Patent Document 2 discloses a battery pack intended to attain an improvement in the heat dissipation properties of secondary batteries and mitigation of performance deterioration. The battery pack described in Patent Document 2 is one which includes a plurality of secondary batteries enclosed in a case and in which a plate-shaped rubber sheet having a heat transfer coefficient not lower than a given value and being changed in shape by pressure has been disposed between the plurality of secondary batteries and the case.

Patent Document 2 states that since the heat transfer coefficient of the rubber sheet is relatively high, the heat of the secondary batteries can be satisfactorily discharged via the case. Furthermore, this battery pack can be prevented from being damaged when dropped, since the rubber sheet has elasticity.

Furthermore, Patent Document 3 discloses an anti-firing material capable of reducing the risk of firing in electricity storage devices. The above anti-firing material is, for example, a porous carbonaceous material having a noncombustible gas, aqueous solvent, or noncombustible solvent adsorbed into the pores and onto the surface thereof.

Patent Document 3 as stated above describes that in case of abnormality, when the secondary battery has released the electrolytic solution or a gaseous component, e.g., an electrolytic-solution decomposition gas, then an effect can be obtained in which the gaseous component passes through the above anti-firing material and is thereby reduced in temperature.

### CITATION LIST

### PATENT LITERATURE

Patent Document 1: JP2014-96271A
Patent Document 2: JP2004-146161A
Patent Document 3: JP2013-187089A

### SUMMARY OF INVENTION

### TECHNICAL PROBLEMS

However, in the assembled battery described in Patent Document 1, since the block made of a metallic material is composed of two, vertically separated parts and has a heat insulator disposed between the two parts, it is difficult to efficiently dissipate heat generated from one battery.

Furthermore, the assembled battery described in Patent Document 1 necessitates a plurality of blocks and the blocks need to be designed in accordance with the electronic appliance, power tool, or the like in which the assembled battery is to be mounted, since the gaps between the blocks and the battery cells are varied. There is hence a problem in that the design of the blocks and fabrication of the assembled battery are complicated.

The battery pack described in Patent Document 2 has no means whereby the occurrence of thermal runaway in one battery cell is inhibited from resulting in thermal runaway in another adjoining battery cell.

Meanwhile, with respect to Patent Document 3, the anti-firing material, although effective against the evolution of a gaseous component from a secondary battery in case of abnormality, is unable to lower the temperature of the batteries themselves in cases when the battery cells which have been fabricated into an assembled battery are subjected to charge/discharge cycling (i.e., "during ordinary use") and in case of abnormality.

The present invention is made in view of those problems, and an object of the present invention is to provide an assembled battery and a battery pack which are easy to design and fabricate and in which during ordinary use and in case of abnormality, heat transfer between battery cells can be inhibited and the battery cells can be efficiently cooled to inhibit the occurrence of thermal runaway.

### SOLUTION TO THE PROBLEMS

The object of the present invention is accomplished with the following configuration [1] regarding an assembled battery.

[1] An assembled battery in which a plurality of battery cells is connected serially or in parallel, the battery cells each having an electrode surface having an electrode and a peripheral surface orthogonal to the electrode surface and being disposed such that the peripheral surfaces face each other,
   the assembled battery including
   the battery cells,
   an insulating material covering the peripheral surface of the battery cells, and
   a heat dissipation member covering the peripheral surface of the battery cells which is covered with the insulating material, wherein
   the insulating material has a plurality of holes piercing the insulating material from a surface thereof facing the battery cells to a surface thereof facing the heat dissipation member

   Preferred embodiments of the present invention regarding assembled batteries relate to the following [2] to [11].
[2] The assembled battery according to [1] wherein the insulating material has a withstand voltage of 500 V or higher.
[3] The assembled battery according to [1] or [2] wherein the insulating material has a mesh shape.
[4] The assembled battery according to any one of [1] to [3] wherein the insulating material is formed of an elastic material made of a rubber or an elastomer, the assembled battery being configured such that the insulating material covers the peripheral surface of the battery cell along a peripheral direction and presses the battery cell.
[5] The assembled battery according to [4] wherein the insulating material is a tubular body which is open at both ends.
[6] The assembled battery according to [4] or [5] which includes a flameproof material disposed between the battery cell and the insulating material, the flameproof material covering the peripheral surface of the battery cell.
[7] The assembled battery according to [4] or [5] which includes a flameproof material covering the peripheral surface of the battery cell covered with both the insulating material and the heat dissipation member
[8] The assembled battery according to any one of [1] to [3] wherein the insulating material is formed of a flameproofing material containing organic fibers and/or inorganic fibers.
[9] The assembled battery according to any one of [1] to [8] wherein the heat dissipation member is a tubular body which is open at both ends.
[10] The assembled battery according to any one of [1] to [8] wherein the heat dissipation member is a sheet-shaped heat dissipation material wrapped around the peripheral surface of the battery cell which is covered with the insulating material.
[11] The assembled battery according to any one of [1] to [10] wherein the heat dissipation member is made of at least one material selected from among metals, carbon, and ceramics.
   The object of the present invention is accomplished with the following configuration [12] regarding a battery pack.
[12] A battery pack in which the assembled battery according to any one of [1] to [11] is encased in a battery case.

### ADVANTAGEOUS EFFECTS OF INVENTION

The assembled battery of the present invention includes an insulating material covering the peripheral surface of each battery cell, and the insulating material has a plurality of holes piercing the insulating material from the surface thereof facing the battery cell to the surface thereof facing the heat dissipation member. Due to this, during ordinary use and in case of abnormality, heat generated in each battery cell can be effectively transferred to the heat dissipation member. Since the heat dissipation member covers the peripheral surface of the insulating material, the heat which has reached the heat dissipation member can be efficiently radiated to the outside. Furthermore, since the assembled battery of the present invention can be fabricated by merely attaching the insulating material and the heat dissipation member to the peripheral surface of each battery cell, there is no need of changing the design of the battery case in accordance with the kind of the battery cells and fabrication of the assembled battery requires no complicated operation.

Since the battery pack of the present invention includes the assembled battery encased, not only the transfer of heat between the battery cells can be inhibited and the propagation of thermal runaway can be prevented, but also this battery pack can be easily fabricated.

### BRIEF DESCRIPTION OF DRAWINGS

FIG. 1 is a cross-sectional view schematically illustrating a battery pack containing an assembled battery according to a first embodiment of the present invention.
FIG. 2 is a partly cross-sectional view schematically illustrating some of the assembled battery according to the first embodiment of the present invention.
FIG. 3 is a cross-sectional view schematically illustrating a battery pack containing an assembled battery according to a second embodiment of the present invention.
FIG. 4 is a cross-sectional view schematically illustrating a battery pack containing an assembled battery according to a third embodiment of the present invention.
FIG. 5 is a partly cross-sectional view schematically illustrating some of an assembled battery employing insulating materials having mesh shape.

### DESCRIPTION OF EMBODIMENTS

The present inventor diligently made investigations in order to provide an assembled battery in which during ordinary use and in case of abnormality, heat transfer between the battery cells can be inhibited and the battery cells can be efficiently cooled to inhibit the occurrence of thermal runaway.

As a result, the inventor has discovered that the problems described above can be eliminated by covering the peripheral surface of each battery cell with an insulating material having a plurality of holes and covering the peripheral surface thereof with a heat dissipation member

Embodiments of the present invention are described in detail below while referring to the drawings. The present invention is not limited to the following embodiments, and can be modified at will so long as the modifications do not depart from the spirit of the invention.

### [Battery Pack]

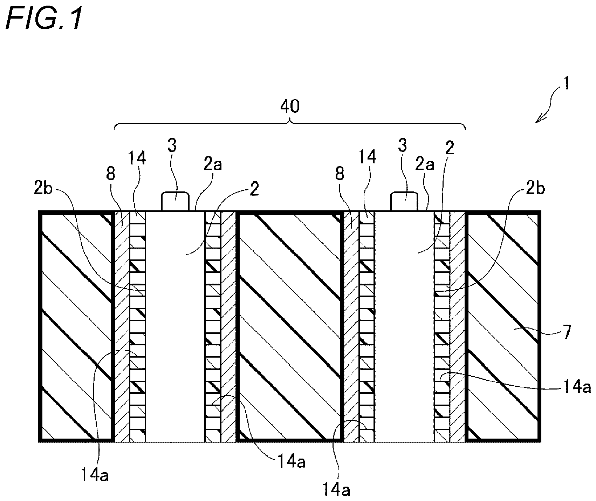

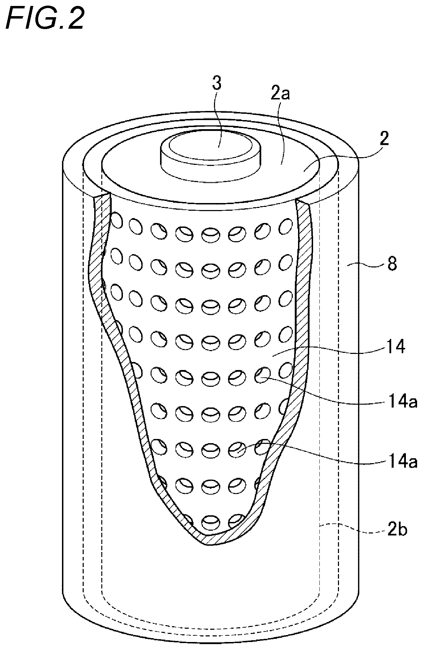

FIG. 1 is a cross-sectional view schematically illustrating a battery pack containing an assembled battery according to a first embodiment of the present invention. FIG. 2 is a partly cross-sectional view schematically illustrating some of the assembled battery according to the first embodiment of the present invention. The battery pack 1 is one obtained by encasing an assembled battery 40 according to a first embodiment, which is described in detail below, in a battery case 7 made of, for example, a resin.

### <Assembled Battery>

### [First Embodiment]

The assembled battery according to a first embodiment of the present invention is described in detail below.

As FIG. 1 and FIG. 2 show, each battery cell 2 has an electrode surface 2a having an electrode 3 and a peripheral surface 2b that is a surface orthogonal to the electrode surface 2a. The battery cells 2 have been disposed such that the peripheral surfaces 2b thereof face each other, and are connected serially or in parallel, with the electrodes 3 and a connector (not shown), etc. interposed therebetween.

The peripheral surface 2b of each battery cell 2 is covered with an insulating material 14 and the peripheral surface of the insulating material 14 is covered with a heat dissipation member 8 made of, for example, a metal, thereby configuring the assembled battery 40.

In this embodiment, the insulating material 14 is formed of an elastic material made of a rubber or elastomer, is a tubular body which is open at both ends, and covers the peripheral surface of the battery cell 2 and flameproof material 4 along the peripheral direction. The insulating material 14 has a plurality of holes 14a piercing the insulating material 14 in the thickness direction thereof from the surface facing the battery cell 2 to the surface facing the heat dissipation member 8.

In this embodiment, the expression "both ends of the insulating material 14 (tubular body)" means one longitudinal-direction (top-bottom direction in FIG. 1) end of the insulating material 14 and the other end thereof, namely, the open ends of the tubular body.

In the assembled battery 40 having such configuration, the peripheral surface 2b of each battery cell 2 is covered with the insulating material 14 made of an elastic material, and the rubber or elastomer used as the material of the elastic material is superior in heat-insulating property to the heat dissipation member 8. Consequently, some of the heat generated by the battery cell 2 during ordinary use and in case of abnormality can be inhibited from being transferred to the heat dissipation member 8.

Meanwhile, since the insulating material 14 has a plurality of holes 14a, the remainder of the heat generated by the battery cell 2 is efficiently transferred to the heat dissipation member 8 via the holes 14a.

In general, if a member or material having high electrical conductivity has been disposed in the vicinity of a battery cell 2, there is a risk that the battery cell 2 short-circuits. In this embodiment, since the insulating material 14 has been disposed between the battery cell 2 and the heat dissipation member 8, it is possible to prevent the short-circuiting.

The heat dissipation member 8 further covering the peripheral surface of the battery cell 2 and insulating material 14 is made of a material having excellent thermal conductivity, as will be described later. Because of this, the heat which has reached the heat dissipation member 8 via the holes 14a of the insulating material 14 spreads in plane directions of the dissipation member 8 and is radiated to both end sides of the heat dissipation member 8, that is, both end sides of the insulating material 14. The battery cell 2 can hence be efficiently cooled.

Furthermore, in this embodiment, since only some of the heat generated by the battery cell 2 is transferred to the heat dissipation member 8, it is possible to prevent the heat dissipation member 8 from being excessively heated. A battery cell adjoining another battery cell can hence be inhibited from receiving heat therefrom and the propagation of thermal runaway can be prevented.

Incidentally, when thermal runaway occurs in a battery cell in case of abnormality, a gas is evolved within this battery to elevate the internal pressure and thus cause a deformation of the battery cell. This deformation, when large, may cause breakage of the case.

In the assembled battery 40 according to the first embodiment, the insulating material 14, which covers the peripheral surface of each battery cell 2 along the peripheral direction and presses the battery cell 2, has both the effect of inhibiting the battery cell 2 from deforming and the effect of absorbing deformations of the battery cell 2. That is, when the battery cell 2 deforms in case of abnormality, the insulating material 14 deforms flexibly in accordance with the deformation of the battery cell 2 while inhibiting the deformation of the battery cell 2. The battery case 7 can hence be inhibited from breaking.

Even in charge/discharge cycling during ordinary use, the battery cell 2 undergoes slight deformations. That is, in cases when the gap between the battery cell 2 and the battery case 7 is small, the battery cell 2, when having expanded, is pressed by the battery case 7 and the battery cell 2, when having contracted, is released from the pressure of the battery case 7. Such repetitions of the pressing to the battery cell 2 and the relaxation thereto are causative of a decrease in battery performance.

In this embodiment, since the insulating material 14 deforms flexibly in accordance with even slight deformations of the battery cell 2 in charge/discharge cycling during ordinary use, it is possible to inhibit the battery cell 2 from decreasing in battery performance.

Moreover, in this embodiment, in cases when the heat dissipation member 8 is made of a metal and is a tubular body like the insulating material 14, this heat dissipation member 8 has substantially no stretchability. However, since the assembled battery 40 includes the elastic insulating material 14 disposed between each battery cell 2 and the heat dissipation member 8, slight deformations of the battery cell 2 during ordinary use can be absorbed to prevent a pressure from being unnecessarily applied to adjoining battery cells 2 during ordinary use.

By reducing the gap between the heat dissipation member 8 and the battery cell 2 and insulating material 14, it is rendered possible to further enhance the effect wherein if the battery cell 2 has deformed in case of abnormality, the deformation of the battery cell 2 is inhibited by the heat dissipation member 8. The battery case 7 can hence be inhibited from breaking.

Even if the battery cell 2 has heated up to an even higher temperature and exploded due to an increase in internal pressure, the covering of the battery cell 2 with both the insulating material 14 and the heat dissipation member 8 makes it possible to avoid a trouble, for example, that fragments of the battery cell 2, an organic electrolytic liquid present in the battery cell 2, etc. reach other battery cells 2 to exert an adverse influence.

In this embodiment, the battery cells 2 may be prismatic or round.

The holes 14a of the insulating material 14 are not particularly limited in the number and size thereof. The number and size of the holes 14a can be suitably designed so long as insulation between the battery cell 2 and the heat dissipation member 8 can be ensured.

The heat dissipation member 8 preferably covers all of the peripheral surface of the battery cell 2 covered with the insulating material 14. However, some of the peripheral surface may be uncovered according to need, so long as the heat dissipation member 8 can have the heat dissipation effect described above.

In the assembled battery 40 according to the first embodiment described above, the heat dissipation members 8 were each a tubular body open at both ends. However, the heat dissipation members 8 are not limited to tubular bodies. For example, a sheet-shaped heat dissipation material may be used and wrapped around the outer surface of a battery cell 2 covered with an insulating material 14 to form a heat dissipation member 8.

In the case of using a heat dissipation member thus formed, the effect of inhibiting the battery cell 2 from deforming is lower than that in the case of using the tubular heat dissipation member 8. However, in the first embodiment, since the insulating material 14 covers the peripheral surface of the battery cell 2 along the peripheral direction and presses the battery cell 2, it is possible to inhibit the battery case 7 from breaking, while the battery cell 2 is being allowed to deform.

Even with a sheet-shaped heat dissipation material, a tubular heat dissipation member 8 can be easily produced by wrapping the sheet around the outer surface of the insulating material 14 and then fixing the free end of the wrapped sheet to some of the wrapped sheet.

### [Second Embodiment]

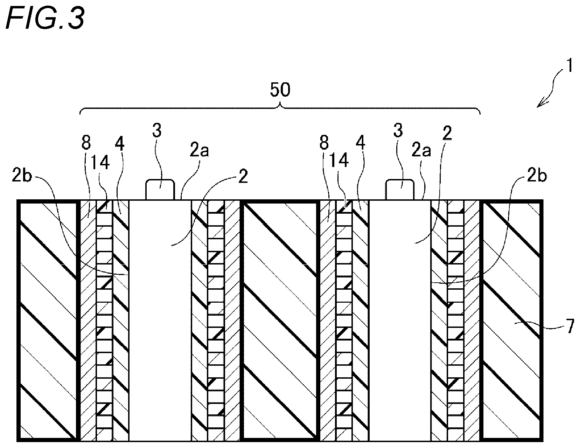

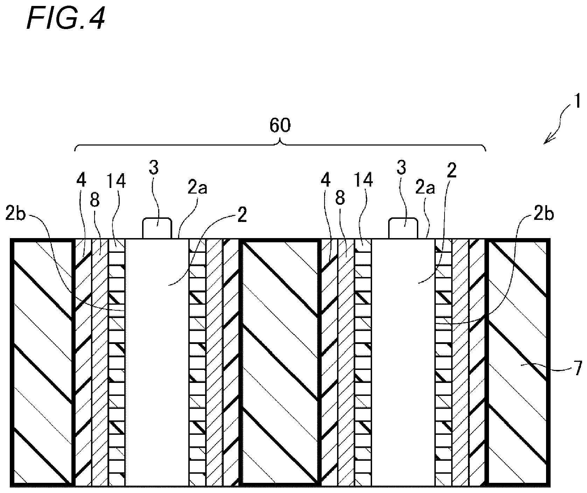

FIG. 3 is a cross-sectional view schematically illustrating a battery pack containing an assembled battery according to a second embodiment of the present invention. In FIGs. 3 and 4, which show the second and third embodiments described below, parts or portions that are identical with or equal to those in the first embodiment are designated by like numerals, and explanations thereon are omitted or simplified.

In the second embodiment, the assembled battery 50 includes flameproof materials 4 each disposed between a battery cell 2 and an insulating material 14.

In the second embodiment, which has such configuration, since the peripheral surface 2b of each battery cell 2 is covered with the flameproof material 4, the heat generated by the battery cell 2 can be more effectively inhibited from being transferred to the periphery during ordinary use and in case of abnormality, as compared with the case of covering with only two layers, i.e., the insulating material 14 and the heat dissipation member 8. Especially in case of abnormality, when thermal runaway has occurred in one battery cell, heat transfer to the periphery is inhibited and, hence, battery cells adjoining said one battery cell can be inhibited from receiving the heat. Thus, the propagation of thermal runaway can be prevented.

Of the portion of heat that was unable to be inhibited by the flameproof material 4 from being transferred, some is blocked by the insulating material 14 as in the first embodiment and the remainder is transferred to the heat dissipation member 8 via the holes 14a and radiated. Consequently, in case where thermal runaway has occurred in one battery cell, the propagation of the thermal runaway can be more effectively inhibited than that in the first embodiment.

In cases when the insulating material 14 is made of a material which is prone to be altered by heat and when the insulating material 14 is in contact with a battery cell 2 having a high temperature, there is a possibility that this insulating material 14 might decrease in insulating performance and in the property of transferring heat to the heat dissipation member 8, because of melting, etc. In the second embodiment, since the flameproof material 4 has been disposed so as to be in contact with the battery cell 2, the insulating material 14 can be inhibited from being affected by the heat.

### [Third Embodiment]

FIG. 4 is a cross-sectional view schematically illustrating a battery pack containing an assembled battery according to a third embodiment of the present invention.

In the third embodiment, the assembled battery 60 includes flameproof materials 4 each disposed on the peripheral surface of an insulating material 14 and a heat dissipation member 8 which have been disposed over the peripheral surface 2b of a battery cell 2.

In the third embodiment, which has such configuration, the heat which has reached the heat dissipation member 8 and been transferred in the thickness direction of the heat dissipation member 8 can be blocked by the flameproof material 4. Because of this, the heat which has reached the heat dissipation member 8 is apt to be transferred in plane directions of the heat dissipation member 8. The effect of radiating the heat from both ends of the heat dissipation member 8 can hence be enhanced, and the transfer of heat from a battery cell where thermal runaway has occurred to the periphery thereof can be more effectively inhibited.

In the second and third embodiments, which include flameproof materials 4, each flameproof material 4 need not cover all the peripheral surface of the battery cell 2 or heat dissipation member 8, and may be one which can be expected to have the effects of flameproof materials 4 described above. For example, each flameproof material 4 may cover only some of the peripheral surface of the battery cell 2 or heat dissipation member 8.

Next, the insulating materials 14, heat dissipation members 8, and flameproof materials 4 which constitute the assembled batteries according to the embodiments are described in detail.

### (Insulating Materials)

The insulating materials 14 used in the assembled batteries 40, 50, and 60 according to the embodiments may be ones formed of an elastic material made of a rubber or elastomer, as shown in the first to third embodiments, or may be ones made of a flameproofing material.

The insulating materials preferably have insulating performance including, for example, a withstand voltage of 500 V or higher.

In the case where the insulating materials 14 are formed of an elastic material, the elastic material preferably has both elasticity which enables the insulating materials 14 to deform flexibly in accordance with deformations of the battery cells 2 and stretchability which enables the insulating materials 14 attached to the peripheral surfaces of the battery cells 2 or heat dissipation members 8 to press the battery cells 2. More preferably, the elastic material has heat-insulating properties.

In the case where the insulating materials 14 are formed of a flameproofing material, the flameproofing material preferably contains organic fibers and/or inorganic fibers, and more preferably contains inorganic particles according to need. In the embodiments, use can be made of these materials which have been processed into, for example, a sheet shape. Since it is important that materials for constituting the insulating materials 14 should have insulation properties, these materials are selected from among materials having high insulating performance.

Examples of the inorganic fibers include silica-alumina fibers, alumina fibers, silica fibers, rock wool, alkaline-earth silicate fibers, glass fibers, zirconia fibers, and potassium titanate whisker fibers. These inorganic fibers are preferred from the standpoints of heat resistance, strength, availability, etc. Inorganic fibers of one kind may be used alone, or two or more kinds of inorganic fibers may be used in combination. Especially preferred of those inorganic fibers from the standpoint of handleability are silica-alumina fibers, alumina fibers, silica fibers, rock wool, alkaline-earth silicate fibers, and glass fibers.

The cross-sectional shape of the inorganic fibers is not particularly limited, and examples thereof include a circular cross-section, a flat cross-section, a hollow cross-section, a polygonal cross-section, and a core cross-section. Of these, fibers having an unusual cross-section such as a hollow, flat, or polygonal cross-section are suitable for use because such fibers slightly improve the heat-insulating properties.

A preferred lower limit of the average fiber length of the inorganic fibers is 0.1 mm, and a more preferred lower limit thereof is 0.5 mm. Meanwhile, a preferred upper limit of the average fiber length of the inorganic fibers is 50 mm, and a more preferred upper limit thereof is 10 mm. In case where the average fiber length of the inorganic fibers is less than 0.1 mm, the inorganic fibers are less apt to be intertwined with each other and this may reduce the mechanical strength of the insulating material 14. Meanwhile, in case where the average fiber length thereof exceeds 50 mm, the inorganic fibers, although having a reinforcing effect, cannot be tightly intertwined with each other, or the individual inorganic fibers separately become round and this is prone to form continuous voids and may hence result in a decrease in heat-insulating property.

A preferred lower limit of the average fiber diameter of the inorganic fibers is 1 µm, a more preferred lower limit thereof is 2 µm, and a still more preferred lower limit thereof is 3 µm. Meanwhile, a preferred upper limit of the average fiber diameter of the inorganic fibers is 15 µm, and a more preferred upper limit thereof is 10 µm. In case where the average fiber diameter of the inorganic fibers is less than 1 µm, the inorganic fibers themselves are likely to have reduced mechanical strength. From the standpoint of influences on human health, the average fiber diameter of the inorganic fibers is preferably 3 µm or larger. Meanwhile, in case where the average fiber diameter of the inorganic fibers is larger than 15 µm, there is a possibility that heat transfer by the inorganic fibers as a solid medium might be enhanced to result in a decrease in heat-insulating property and that the insulating material might be deteriorated in shapability and strength.

As the organic fibers, fibers made of heat-curing resins and thermoplastic resins can be selected. For example, use can be made of synthetic fibers made of modified poly(ethylene terephthalate) (PET), polyethylene (PE), polypropylene, polyesters, nylons, poly(butylene terephthalate), and the like.

The kinds, structures, etc. of synthetic fibers usable in the embodiments are explained in greater detail below.

Vinylon: fibers made of a long-chain synthetic polymer including at least 65 mass% vinyl alcohol units.

Vinylal: fibers made of a long-chain synthetic poly(vinyl alcohol) polymer having a different degree of acetalization.

Poly (vinyl chloride) (chlorofiber): fibers made of a long-chain synthetic polymer including vinyl chloride units as a main component.

Vinylidene (poly(vinylidene chloride), chlorofiber): fibers made of a long-chain synthetic polymer including vinylidene chloride units (-CH₂-CCl₂-) as a main component.

Acrylic: fibers made of a long-chain synthetic polymer including at least 85 mass% repeating units of acrylonitrile group.

Modacrylic: fibers made of a long-chain synthetic polymer including repeating units of acrylonitrile group in an amount of 35 mass% or larger but less than 85 mass%.

Nylon (polyamide): fibers made of a long-chain synthetic polymer in which 85% or more of repeating amide bonds are bonded to aliphatic or alicyclic units.

Aramid: fibers made of a long-chain synthetic polymer in which 85 mass% or more of amide or imide bonds are each directly bonded to two benzene rings and the number of imide bonds, if any, does not exceed the number of amide bonds.

Polyester: fibers made of a long-chain synthetic polymer including at least 85 mass% units of an ester of terephthalic acid with a dihydric alcohol.

Poly(ethylene terephthalate) (PET): fibers made of a long-chain synthetic polymer including at least 85 mass% units of an ester of terephthalic acid with ethylene glycol.

Poly(trimethylene terephthalate) (PTT): fibers made of a long-chain synthetic polymer including at least 85 mass% units of an ester of terephthalic acid with 1,3-propanediol.

Poly(butylene terephthalate) (PBT): fibers made of a long-chain synthetic polymer including at least 85 mass% units of an ester of terephthalic acid with 1,4-butanediol.

Polyethylene (PE): fibers made of a long-chain synthetic polymer formed from a saturated aliphatic hydrocarbon and having no substituents.

Polypropylene (PP): fibers made of a long-chain synthetic polymer which is a polymer formed from a saturated aliphatic hydrocarbon and having a methyl side chain bonded to one of every two carbon atoms and which has stereoregularity and has no other substituents.

Polyurethane (elastane): fibers made of a long-chain synthetic polymer which includes 85 mass% or more polyurethane segment and which, when elongated three times the tension-free length, rapidly recovers the original length upon release from the tension.

Poly (lactic acid) (polylactide): fibers made of a long-chain synthetic polymer including lactic ester units in an amount of 50 mass% or larger

Preferred ranges of the average fiber length and average fiber diameter of the organic fibers are the same as those of the inorganic fibers.

The inorganic particles are preferably ones made of a compound having heat resistance. For example, a metal oxide can be used.

Specific examples of the metal oxide include silica (SiO₂), alumina (Al₂O₃), mullite (Al₆O₁₃Si₂), zirconia (ZrO₂), magnesia (MgO), and titania (TiO₂). However, the metal oxide is not limited to these. Besides those metal oxides, preferred examples of the inorganic particles include boron nitride (BN) and boron carbide (B₄C).

The holes 14a of each insulating material 14 may be ones formed in a tubular or sheet-shaped material so as to extend from the surface thereof facing the battery cell 2 to the surface thereof facing the heat dissipation member 8, as shown in the aforementioned embodiments, or may be ones formed by processing a material for the insulating material 14 into a mesh shape.

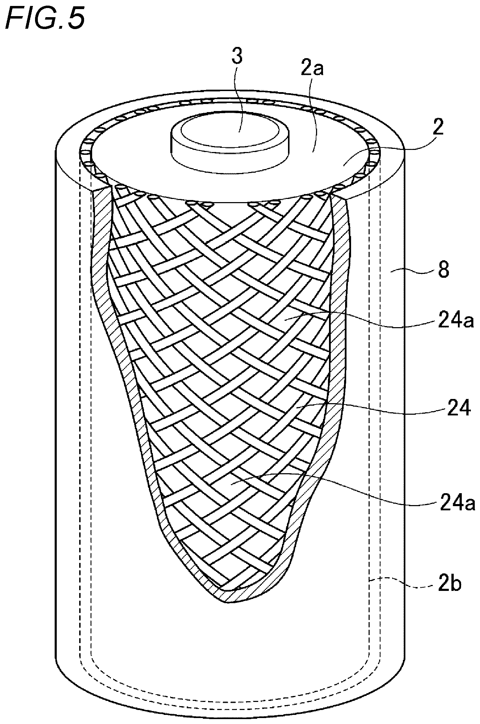

FIG. 5 is a partly cross-sectional view schematically illustrating some of an assembled battery employing insulating materials having a mesh shape. As FIG. 5 shows, the insulating material 24 is one obtained by processing a material for the insulating material, such as organic fibers or inorganic fibers, into a cord-shaped one and braiding the resultant into a sheet shape.

Even with an insulating material 24 having such a shape, the insulating material 24 is formed to have holes 24a therein which extend from the surface thereof facing the battery cell 2 to the surface thereof facing the heat dissipation member 8, which can hence provide the same effects as in the first to third embodiments.

### (Heat Dissipation Members)

As materials for the heat dissipation members to be used in the assembled batteries according to the embodiments, materials having thermal conductivity can be selected so that the heat which was generated by each battery cell 2 and has reached the heat dissipation member 8 is diffused in plane directions of the heat dissipation member 8 and radiated to both end sides of the heat dissipation member 8.

Such materials preferably have heat transfer coefficients of, for example, 10 (W/m•K) or higher. Specifically, it is preferred to select at least one material from among metals, carbon, and ceramics.

Examples of the metals include stainless steel, aluminum or aluminum alloys, and copper or copper alloys.

Examples of the ceramics include SiC and AlN.

### (Flameproof Materials)

The assembled batteries 50 and 60 in the second and third embodiments include flameproof materials each disposed between the battery cell 2 and the insulating material 14 or on the peripheral surface of the heat dissipation member 8. As the material of the flameproof materials thus disposed, use can be made of the flameproofing material described above as an example of the material of the insulating materials.

### <Battery Case>

The battery case 7 for encasing therein any of the assembled batteries 40, 50, and 60 according to the embodiments is not particularly limited in the material and shape thereof. Besides being a polycarbonate, the material of the battery case 7 can be PP, PET, a polyamide (PA), aluminum, stainless steel (steel use stainless; SUS), or the like. The shape of the battery case 7 can be selected at will in accordance with the device, e.g., power tool, to which the assembled battery is to be applied.

Incidentally, the assembled batteries 40, 50, and 60 according to the embodiments are ones in which each battery cell 2 by itself has heat-insulating properties and which include the heat dissipation members 8 for further inhibiting heat transfer to adjoining battery cells 2 and can inhibit the occurrence of heat propagation. These assembled batteries hence may not have been encased in the battery case 7. For example, a plurality of battery cells 2 each covered with an insulating material 14 or 24 and with a heat dissipation member 8 may be tied up with a band or the like to configure an assembled battery and this assembled battery as such can be mounted in a device, e.g., a power tool.

### [Method for fabricating Assembled Batteries]

The assembled batteries 40, 50, and 60 according to the embodiments each can be easily fabricated, as an assembled battery showing the effects described above, by merely covering each of battery cells 2 with an insulating material 14 or 24 having the desired holes 14a or 24a formed therein and attaching thereto a heat dissipation member 8 which is, for example, a tubular body. Since an insulating material 14 or 24 and a heat dissipation member 8 are attached to each of the battery cells 2, a complicated design is unnecessary for the battery case 7.

In the embodiments, in cases when the insulating materials 14 or 24 are sheet-shaped ones, the insulating materials 14 or 24 each can be easily processed into a size suitable for covering the peripheral surface of a battery cell 2 regardless of the shape or size of the battery cell 2. In cases when the insulating materials 14 or 24 are tubular bodies made of an elastic material, the insulating materials 14 or 24 can be easily attached to various battery cells 2 without being affected by the shapes and sizes of the battery cells 2, since the elastic material has stretchability.

The assembled batteries and battery packs according to the embodiments can be favorably used not only in power tools but in power-assisted bicycles, electric two-wheeled vehicles, electric vehicles, etc.

Various embodiments were explained above while referring to the drawings, but it is a matter of course that the present invention is not limited to those examples. It is apparent that a person skilled in the art can conceive of variously modified or changed examples within the scope of the claims, and these examples are, of course, considered to be within the technical range of the present invention. The constituent elements in the embodiments described above may be combined at will so long as the combinations do not depart from the spirit of the invention.

This application is based on a Japanese patent application filed on February 1, 2021 (Application No. 2021-014633), the contents thereof being incorporated herein by reference.

### REFERENCE SIGNS LIST

1: Battery pack
2: Battery cell
2a: Electrode surface
3: Electrode
4: Flameproof material
7: Battery case
8: Heat dissipation member
14, 24: Insulating material
14a, 24a: Hole
40, 50, 60: Assembled battery

## Claims

1. An assembled battery in which a plurality of battery cells is connected serially or in parallel, the battery cells each having an electrode surface having an electrode and a peripheral surface orthogonal to the electrode surface and being disposed such that the peripheral surfaces face each other,
the assembled battery comprising
the battery cells,
an insulating material covering the peripheral surface of the battery cells, and
a heat dissipation member covering the peripheral surface of the battery cells which is covered with the insulating material, wherein
the insulating material has a plurality of holes piercing the insulating material from a surface thereof facing the battery cells to a surface thereof facing the heat dissipation member

2. The assembled battery according to claim 1, wherein the insulating material has a withstand voltage of 500 V or higher.

3. The assembled battery according to claim 1 or 2, wherein the insulating material has a mesh shape.

4. The assembled battery according to any one of claims 1 to 3, wherein the insulating material is formed of an elastic material made of a rubber or an elastomer, the assembled battery being configured such that the insulating material covers the peripheral surface of the battery cell along a peripheral direction and presses the battery cell.

5. The assembled battery according to claim 4, wherein the insulating material is a tubular body which is open at both ends.

6. The assembled battery according to claim 4 or 5, which comprises a flameproof material disposed between the battery cell and the insulating material, the flameproof material covering the peripheral surface of the battery cell.

7. The assembled battery according to claim 4 or 5, which comprises a flameproof material covering the peripheral surface of the battery cell covered with both the insulating material and the heat dissipation member.

8. The assembled battery according to any one of claims 1 to 3, wherein the insulating material is formed of a flameproofing material containing organic fibers and/or inorganic fibers.

9. The assembled battery according to any one of claims 1 to 8, wherein the heat dissipation member is a tubular body which is open at both ends.

10. The assembled battery according to any one of claims 1 to 8, wherein the heat dissipation member is a sheet-shaped heat dissipation material wrapped around the peripheral surface of the battery cell which is covered with the insulating material.

11. The assembled battery according to any one of claims 1 to 10, wherein the heat dissipation member is made of at least one material selected from among metals, carbon, and ceramics.

12. A battery pack in which the assembled battery according to any one of claims 1 to 11 is encased in a battery case.
